# DEMANDE DE BREVET EUROPEEN

(11) **EP 1 213 808 A2**
(43) Date de publication de la demande: **12.06.2002**
(21) Numéro de dépôt: 01402797.3
(22) Date de dépôt: 26.10.2001
(51) Int. Cl.: H02G 1/12

(54) **Outil de dénudage manuel de câbles électriques**

(30) Priorité: 08.12.2000 FR 0016017
(71) Demandeur: FACOM, 91420 Morangis (FR)
(72) Inventeur: Flavigny, Jean Pierre, 91310 Linas (FR)
(74) Mandataire: Jacobson, Claude

(57) **Abrégé**

Cet outil de dénudage comprend un corps (2) qui porte un couteau (3) d'incision de la gaine (49) du câble (48) et un organe (7) de serrage du câble vers le couteau, monté mobile sur le corps en regard du couteau et sollicité vers ce dernier par un ressort de rapprochement (8).

Le couteau (3) fait saillie dans un berceau fixe (41) en V solidaire du corps (2) et opposé à l'organe de serrage (7) et est sollicité élastiquement vers cet organe par un second ressort (6) dont la raideur est inférieure à celle du ressort de rapprochement (8).

## Description

La présente invention est relative à un outil de dénudage manuel de câble électrique, du type décrit dans le préambule de la revendication 1.

Un exemple d'un tel outil est décrit dans le EP-A-0 704 951.

L'invention a pour but d'améliorer la stabilité du câble pendant le dénudage, tout en garantissant une profondeur d'incision précise de la gaine pour une large gamme de diamètre de câbles.

A cet effet, l'invention a pour objet un outil de dénudage du type précité, caractérisé par la partie caractérisante de la revendication 1.

L'outil de dénudage suivant l'invention peut comporter une ou plusieurs des caractéristiques décrites dans les revendications 2 à 8.

Des exemples de réalisation de l'invention vont maintenant être décrits en regard des dessins annexés, sur lesquels :
- la Figure 1 représente en coupe longitudinale un outil de dénudage de câble électrique ;
- la Figure 2 représente en coupe longitudinale, à plus grande échelle, un détail de cet outil ;
- la Figure 3 est une vue en perspective éclatée du porte-couteau et de son dispositif de réglage ;
- la Figure 4 est une vue partielle prise en coupe suivant la ligne IV-IV de la Figure 3 ;
- la Figure 5 est une vue analogue à la Figure 1 avec l'organe de serrage en position ouverte ;
- la Figure 6 est vue analogue la Figure 1 avec l'organe de serrage rappelé sur un câble à dénuder ;
- la Figure 7 est une vue analogue à la Figure 6, illustrant l'incision circonférentielle de la gaine du câble ;
- la Figure 8 est une vue analogue à la Figure 7, illustrant l'incision longitudinale de la gaine du câble ;
- la Figure 9 est une vue analogue à la Figure 1, illustrant la lame de coupe en cours de sortie ;
- la Figure 10 est une vue analogue à la Figure 9, illustrant la lame de coupe totalement sortie ;
- la Figure 11 est une vue analogue à la Figure 5 d'une variante ;
- la Figure 12 est une vue analogue à la Figure 11 d'une autre variante ;
- la Figure 13 est une vue de gauche de l'objet de la Figure 12, prise en coupe partielle suivant la ligne XIII-XIII de cette Figure 12 ;
- la Figure 14 représente en vue extérieure l'outil de la Figure 12, avec l'organe de serrage en position fermée ;
- la Figure 15 est une vue prise sur la flèche XV de la Figure 14 ; et
- la Figure 16 est une vue prise suivant la flèche XVI de la Figure 11.

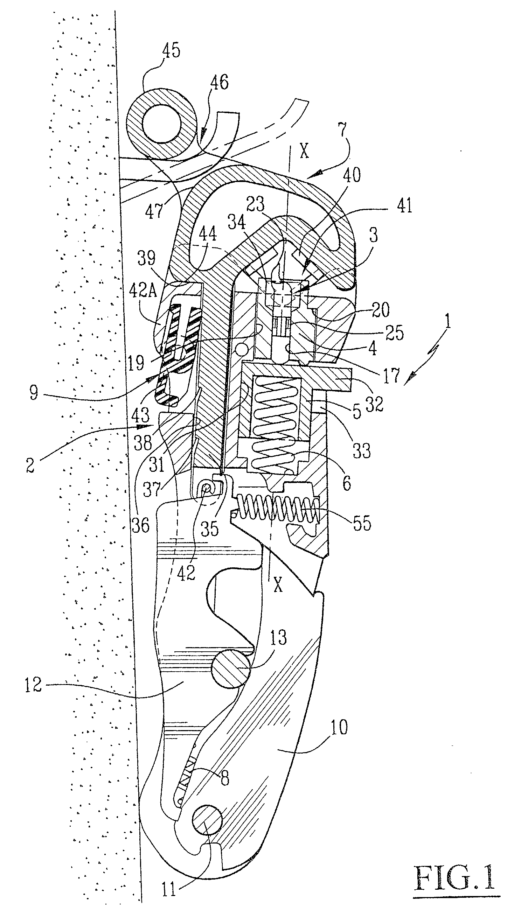

L'outil 1 de dénudage de câble représenté sur les Figures 1 à 4, particulièrement ergonomique et compact, comprend essentiellement : un corps 2 de forme allongée ; un couteau 3 d'incision de gaine de câble, monté dans un porte-couteau 4 ; une douille 5 de réglage du couteau 3, sollicitée par un ressort faible 6 ; un organe 7 de serrage de câble, sollicité par deux ressorts de serrage ou de rapprochement 8 à raideur élevée; un organe 9 de maintien et de libération de l'organe 7 ; une lame de coupe auxiliaire 10, articulée sur un axe 11 solidaire du corps 2 ; et un organe 12 d'ouverture de la lame 10, articulé sur un autre axe 13 solidaire du corps 2.

On entend par « outil de dénudage de câble » un outil de découpe destiné à dénuder ou dégainer, c'est-à-dire enlever le revêtement isolant, d'un conducteur, en particulier d'un câble électrique.

Dans ce qui suit, on supposera le corps 2 orienté comme représenté sur les Figures 1 et 5 à 16, c'est-à-dire sensiblement verticalement, avec l'organe de serrage 7 en haut, l'axe 11 à l'extrémité inférieure du corps et la lame 10 à droite.

Dans cette position, la partie inférieure du corps forme une poignée de préhension de l'outil, sur environ les deux tiers de la longueur du corps.

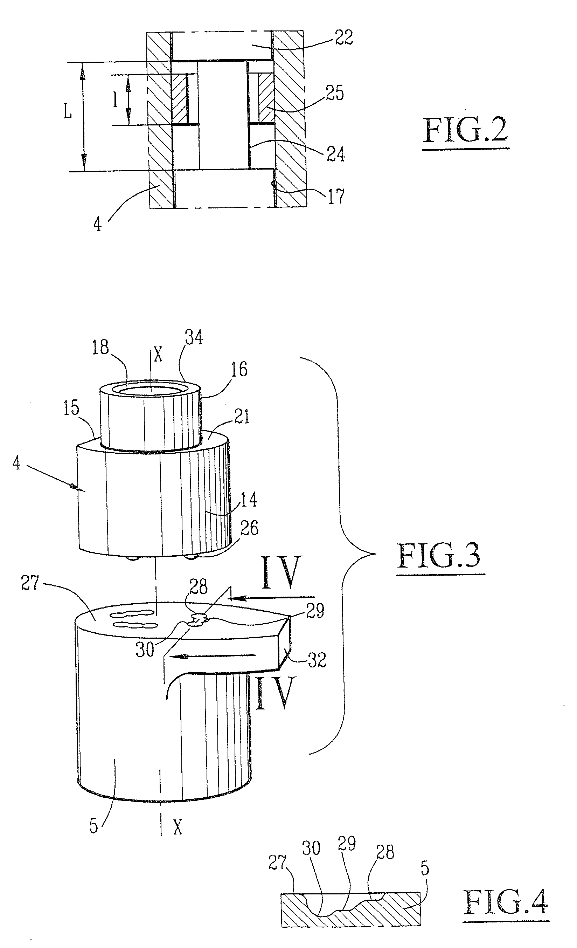

Le porte-couteau 4, mieux visible sur la Figure 3, est une pièce formée de deux parties : une partie inférieure 14 extérieurement cylindrique avec un méplat latéral 15, et une partie supérieure 16 extérieurement cylindrique et de diamètre plus petit. Intérieurement, la partie 14 comporte un passage central 17 de faible diamètre, tandis que la partie 16 comporte un passage central 18 de plus grand diamètre. La pièce 4 est montée par le bas dans un évidement 19 du corps conjugué de la partie 14, cet évidement débouchant sur la face supérieure de ce corps. L'évidement 19 est limité supérieurement par un épaulement 20 en surplomb destiné à coopérer avec l'épaulement annulaire horizontal 21 qui relie les parties 14 et 16 du porte-couteau.

Le couteau 3 comporte un fût rectiligne 22 dont l'extrémité supérieure est coudée en S et porte une lame d'incision excentrée 23, pointée vers le haut. Le fût 22 traverse librement, de part en part, le porte-couteau 4, et comporte à peu près à mi-longueur une gorge circulaire 24. Il est maintenu dans le porte-couteau avec une liberté limitée de déplacement axial par une bague fendue élastiquement 25, de longueur 1 inférieure à la longueur L de la gorge 24 (Figure 2), qui est reçue dans la gorge 24. Cette bague 25, formant moyen de retenue, est montée d'abord dans la gorge circulaire de la lame de coupe et, après contraction élastique, est introduite dans le passage 17 puis vient s'appliquer élastiquement avec frottement contre la paroi de ce dernier.

La face inférieure du porte-couteau 4 porte par ailleurs trois picots 26 à 120° les uns des autres, situés sur un même cercle centré sur l'axe du porte-couteau.

L'organe de réglage 5 a la forme d'une coupelle cylindrique renversée à plaque supérieure 27 plane. Dans cette plaque 27 sont ménagés, sur le même cercle que précédemment, trois groupes d'évidements situés à 120° les uns des autres. Chaque groupe comprend successivement un évidement 28 de faible profondeur, un évidement 29 de profondeur intermédiaire, et un évidement 30 de profondeur supérieure.

L'organe 5 est reçu à coulissement et à rotation dans un évidement cylindrique borgne 31 du corps 2 situé sous l'évidement 19. Il est sollicité vers le haut par le ressort 6, qui est comprimé entre le fond de la coupelle 5 et celui de l'évidement 31. Ainsi, la face supérieure de l'organe 5 est constamment en appui sur les trois picots 26 du porte-couteau et maintient normalement ce dernier en appui contre l'épaulement supérieur 20 de l'évidement 19. De plus, l'extrémité inférieure du fût 22 du couteau 3 est constamment en appui, par gravité, au centre de la face supérieure 27 de l'organe 5.

On a désigné par X-X l'axe commun des pièces 4 et 5 du fût 22.

L'organe 5 peut être tourné autour de l'axe X-X grâce à une patte latérale 32 qui prolonge la face 27 et qui fait saillie hors du corps 2 à travers une fenêtre 33 prévue à droite de celui-ci. Ainsi, la hauteur de la pointe de la lame 23 au-dessus de la tranche d'extrémité plane 34 du porte-couteau 4 peut être réglée sur trois valeurs différentes, suivant que les picots 26 se trouvent au fond des évidements 28, 29 ou 30. Ces trois hauteurs de saillie correspondent aux trois épaisseurs normalisées de câbles électriques de diamètre maximum sensiblement égal à 20 mm, à savoir 1,8 mm, 1,6 mm et 1,2 mm respectivement. Le passage d'une hauteur à une autre s'effectue instantanément par une simple poussée latérale sur la patte 32 avec le pouce de l'utilisateur qui tient le corps 2 à pleine main. Il peut être prévu trois évidements latéraux dans la surface de la pièce 5, ces évidements coopérant avec une bille chargée par un ressort portée par le corps, pour bien définir les trois positions utiles de la patte 32.

L'organe de serrage 7 forme un V renversé situé au-dessus du couteau 3 et centré sur l'axe X-X. La branche du V opposée à la fenêtre 33, c'est-à-dire la branche gauche, se prolonge vers le bas par une tige de guidage 35 à section non circulaire, qui coulisse dans un passage conjugué 36 du corps 2. Le côté gauche de cette tige comporte deux crans, inférieur 37 et supérieur 38, et un épaulement en surplomb 39 est prévu au sommet du côté gauche de la tige 35.

Les deux côtés intérieurs du V 7 sont équipés de rouleaux 40, de même que ceux d'un berceau fixe 41 en V, prévu au sommet du corps 2, ouvert vers le haut et également centré sur l'axe X-X. Ce berceau 41 se compose de deux moitiés identiques situées de part et d'autre du porte-couteau 4, c'est-à-dire en avant et en arrière du plan de la Figure 1.

Les ressorts forts 8 sont des ressorts hélicoïdaux de traction. Leurs extrémités supérieures sont accrochées à un téton 42 solidaire de l'extrémité inférieure de la tige 35, et leurs extrémités inférieures sont accrochées à l'axe inférieur 11. Ainsi, l'organe 7 est sollicité en permanence vers le bas. Il peut être ouvert, c'est-à-dire soulevé, manuellement à l'encontre du ressort 8, et être maintenu temporairement dans l'une de deux positions prédéterminées au moyen de l'organe 9. Ce dernier est une pièce en matière élastique en forme de Y dont la fourche est comprimée entre le côté gauche de la tige 35 et une paroi en surplomb 42A du corps 2. La hampe inférieure du Y fait saillie dans une fenêtre latérale du corps située sous cette paroi 42, et forme une gâchette d'actionnement 43 accessible par l'index de l'utilisateur qui tient le corps 2.

Lorsqu'on soulève l'organe 7, la branche intérieure du Y frotte sur la tige 35, et pénètre successivement dans le cran supérieur 38 et dans le cran inférieur 37. Ceci permet de maintenir l'organe 7 dans l'une ou l'autre de deux positions prédéterminées pendant que le câble à dénuder est introduit dans l'espace séparant les deux V. La libération du V supérieur s'effectue alors par une simple pression de l'index sur la gâchette 43.

A son extrémité supérieure et du côté gauche, l'organe 7 porte une saillie à usage buccal 45 de forme cylindrique à axe horizontal reliée à l'organe 7 par une partie de liaison 46 formant un étranglement, traversée par un passage d'accrochage 47.

La saillie 45 permet à l'utilisateur de tenir l'outil entre les dents pour se libérer temporairement les mains, par exemple lorsqu'il travaille en hauteur, notamment au sommet d'un poteau télégraphique ou analogue.

Le passage 47 permet d'accrocher l'outil à un piton ou analogue, comme représenté sur la Figure 1.

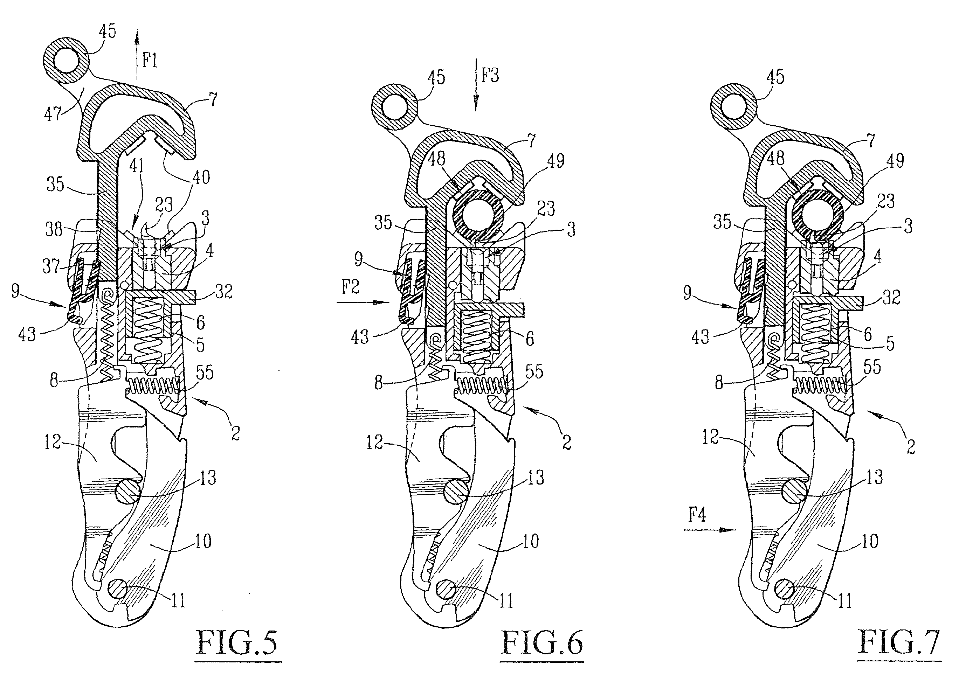

Les Figures 5 à 8 illustrent le fonctionnement de l'outil 1.

Tout d'abord, le corps 2 étant saisi à plein main, l'utilisateur règle la hauteur de saillie du couteau 3 en actionnant la patte 32 avec son pouce. Puis il soulève avec l'autre main l'organe 7 (Figure 5, flèche F1) jusqu'à l'une de ses deux positions stables (Figure 5).

Puis il met en place le câble 48 dans le V inférieur 41, et il presse la gâchette 43 avec son index (Figure 6, flèche F2) pour libérer l'organe 5.

Celui-ci, tiré par le ressort 8, tombe alors brusquement ( Figure 6, flèche F3) sur le câble, dont la gaine 49 s'enfiche sur la lame 23, et l'ensemble couteau 3-porte-couteau 4-organe de réglage 5 descend en comprimant le ressort 6, jusqu'à ce que le câble 6 se positionne sur le berceau 41. L'organe de serrage en V et le berceau fixe en V centrent alors le conducteur en une position adaptée stable pour les opérations de découpe.

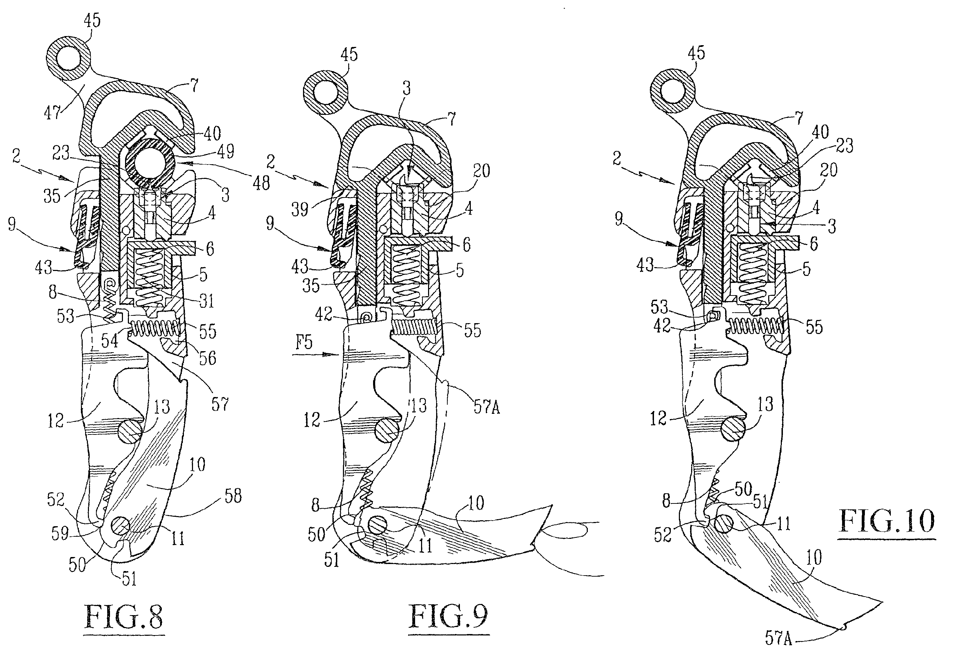

L'opérateur procède alors à l'incision circulaire de la gaine 49, en poussant vers la droite l'extrémité inférieure du corps (flèche F4 de la Figure 7). Il est à noter que ce sens de poussée est celui qui tend à refermer sur le câble l'espace situé entre les deux V.

Ce mouvement provoque, sous l'effet du ressort 6, la remontée progressive du couteau 3, jusqu'à ce que la tranche d'extrémité supérieure 34 du porte-couteau bute contre le câble (Figure 7). La gaine est alors incisée exactement sur la profondeur pré-réglée par l'organe 5, quel que soit le diamètre du câble dans une large gamme de valeurs, et une rotation supplémentaire de l'outil sur un tour complet assure la coupe circulaire du bout de gaine à retirer.

Puis, en tournant sa main d'un quart de tour, l'opérateur saisit de nouveau le corps 2 à pleine main, et il le tire perpendiculairement au plan de la Figure 7. Une incision longitudinale du bout de gaine à retirer est alors effectuée par la lame 23 (Figure 8).

Au cours de ce mouvement, les frottements sont réduits à un minimum grâce à la présence des rouleaux 40 sur les deux V de positionnement du câble, lesquels rouleaux ont leurs axes perpendiculaires à l'axe du câble.

Il est à noter que le montage rotatif et excentrique du couteau 3 permet à celui-ci de s'orienter automatiquement soit circonférentiellement (Figure 7), soit axialement (Figure 8) par rapport au câble suivant la direction de l'effort exercé sur le corps 2.

La lame auxiliaire 10 sert aux autres travaux de coupe plus couramment réalisés par l'utilisateur, par exemple à couper le câble à longueur avant d'effectuer les opérations décrites ci-dessus. Son extrémité articulée en 11 présente une surface de came 50 et une encoche 51.

L'organe d'ouverture 12 est articulé en 13 à peu près à mi-longueur. Son extrémité inférieure comporte un crochet 52 dirigé vers l'axe 11, et son extrémité supérieure un crochet 53 dirigé vers la gauche. Cette extrémité supérieure comporte en outre une saillie 54 dirigée vers la droite, qui sert à centrer un ressort hélicoïdal de compression 55 orienté à peu près horizontalement. Ce ressort prend appui au fond d'une cavité 56 du corps 2 située au-dessous de la cavité 31.

Au repos, la lame 10 est entièrement escamotée dans une fente 57 du corps 2, le dos 58 de la lame affleurant la surface de droite du corps. Sous l'effet du ressort 55, l'extrémité du crochet 52 s'appuie dans un évidement 59 de la surface de came 50 (Figure 8). Ceci, d'une part, empêche toute ouverture intempestive de la lame 10 et, d'autre part, maintient le crochet 53 écarté de la course du téton 42 de la tige 35. De plus, dans cette position, l'extrémité supérieure de la lame 10 est au contact du côté droit de l'organe 12, dans la région supérieure de celui-ci.

Pour sortir la lame 10, il faut d'abord presser l'extrémité supérieure de l'organe 12, laquelle fait saillie sur le côté gauche du corps 2 (flèche F5 de la Figure 9). Une saillie 57A de saisie de la lame 10 se présente alors du côté droit du corps, ce qui permet à l'opérateur de faire pivoter la lame (Figure 9) jusqu'à ouverture complète (Figure 10).

Cette position est définie par l'encliquetage du crochet 52 dans l'encoche 51. La profondeur de cette dernière est telle que le crochet supérieur 53 vient en prise avec le téton 42.

Ainsi, il n'est pas possible d'ouvrir le V supérieur 7 lorsque la lame 10 est sortie, ce qui constitue une sécurité pour l'opérateur.

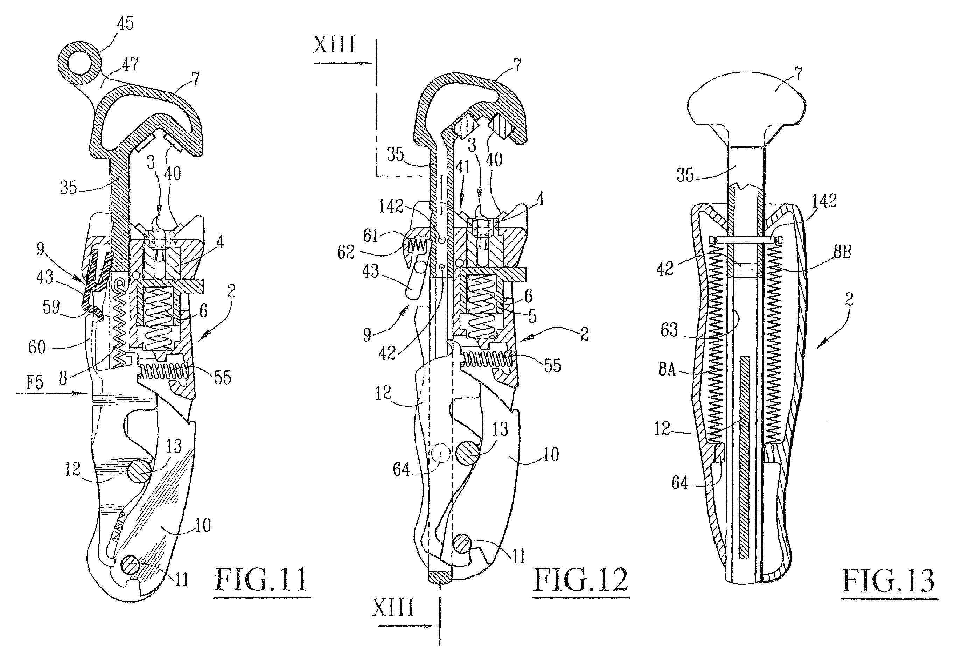

La Figure 11 représente une variante qui possède une sécurité supplémentaire. Elle ne diffère de la précédente que par le fait que la gâchette 43 comporte un prolongement inférieur 59 incurvé vers le bas tandis que le côté gauche de l'organe 12 comporte une languette 60 qui le prolonge vers le haut jusqu'en regard du prolongement 59.

Ainsi, l'actionnement F5 de l'organe 12 provoque également l'actionnement de la gâchette 43, ce qui garantit que le V supérieur sera en position rentrée ou inférieure lorsque la lame 10 sera sortie.

Les Figures 12 à 16 représentent une variante de l'outil 1 qui ne diffère de la précédente que par les points suivants.

D'une part, l'organe 9 est rectiligne, et son rappel élastique vers la tige 35 est assuré par un ressort hélicoïdal 61 coiffé d'une coupelle 62 solidaire du corps.

D'autre part et surtout, la tige 35 traverse le corps 2 de part en part, sur toute sa longueur, et dépasse sous celui-ci. Elle présente pour cela une fente médiane 63 qui permet le libre passage de l'organe 12.

De plus, le rappel élastique du V 7 vers le bas est assuré par deux ressorts hélicoïdaux 8A et 8B tendus entre une broche supérieure 142, qui dépasse de chaque côté de la tige 35, au-dessus du téton 42, et des bossages respectifs 64 du corps 2 situés sensiblement au niveau de l'axe 13. Le téton 42 sert uniquement à l'accrochage de sécurité du crochet 53 de l'organe 12 en position rentrée du V lorsque la lame 10 est sortie.

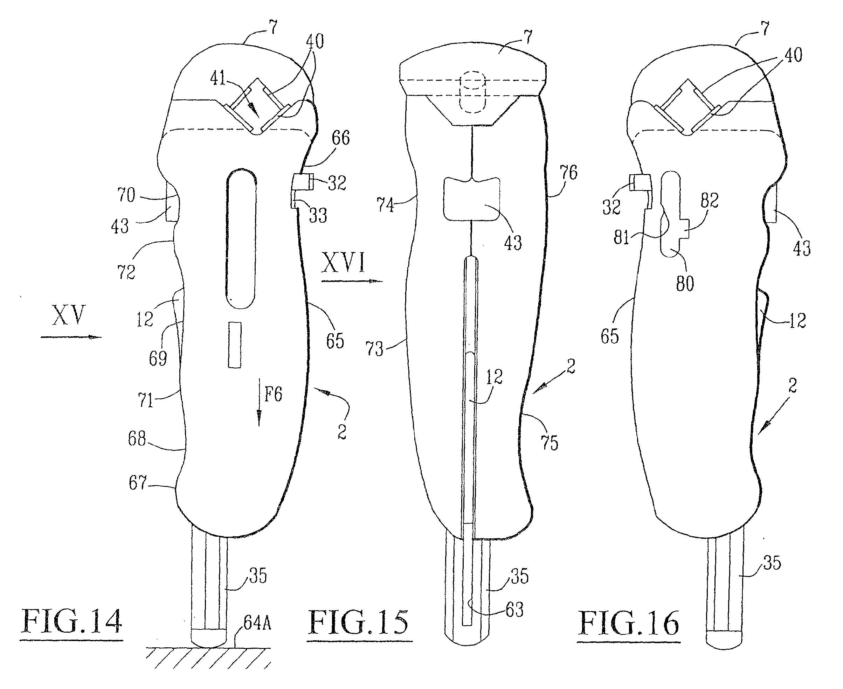

L'avantage essentiel de cette variante réside dans le fait que l'ouverture du V supérieur s'effectue d'une seule main, en posant l'extrémité inférieure de la tige 35 sur une surface suffisamment rigide 64A (Figure 14), qui peut être une partie du corps de l'utilisateur, et en poussant le corps 2 vers cette surface (flèche F6).

Les Figures 14 à 16 permettent de bien voir la forme particulièrement ergonomique du corps 2.

En vue suivant l'axe du câble comme représenté sur la Figure 14, le côté droit du corps est bombé et convexe en 65 sur l'essentiel de sa hauteur, et prolongé vers le haut par une zone concave 66 où se trouve la fenêtre 33. Du côté opposé, on trouve de bas en haut une zone convexe 67 puis trois zones concaves successives 68 à 70 séparées par deux zones convexes plus courtes, inférieure 71 et supérieure 72. L'extrémité supérieure de l'organe 12 fait saillie dans la zone 69, et la gâchette 43 dans la zone 70.

Le corps 2 se positionne donc très bien dans la main, avec la zone 65 dans la paume, le pouce en regard de la zone 66, le majeur en regard de la zone 69 et l'index en regard de la zone 70.

La zone concave 68 permet d'exercer facilement la poussée F4 de la Figure 7.

En vue latérale (Figure 15), on trouve d'un côté (à gauche de la Figure), un profil convexe 73-concave 74 analogue au profil 65-66, et de l'autre côté un profil concave 75-convexe 76 qui lui est sensiblement parallèle. Sous cet angle de vue, le corps 2 a ainsi une forme générale en S, qui permet d'assurer une très bonne saisie à pleine main pour réaliser l'incision longitudinale de la gaine du câble.

Dans chaque mode de réalisation décrit ci-dessus, le corps 2 est réalisé en deux demi-coquilles assemblées par tout moyen connu tel que encliquetage, vis-écrou, etc.

Comme représenté sur la Figure 16, un évidement 80 est pratiqué sur la partie extérieure du corps avec une forme sensiblement allongée, adaptée pour former un logement recevant un couteau d'incision de rechange. Un étranglement 81, notamment venu de matière avec le corps, referme partiellement l'ouverture de l'évidement dans le but de maintenir en position le couteau de rechange dans l'évidement. Un décrochement latéral 82 de l'évidement permet l'insertion d'un petit objet pour retirer le couteau de rechange de son logement.

On comprend qu'il n'est pas nécessaire à l'utilisateur de séparer les deux demi-coquilles et d'ouvrir le corps pour remplacer le couteau d'incision. En effet, le couteau 3 s'extrait du porte-couteau 4 par simple traction en direction de l'organe de serrage 7 lorsque ce dernier se trouve dans une position stable éloignée du corps.

## Revendications

1. Outil de dénudage manuel de câble électrique, du type comprenant un corps (2) qui porte un couteau (3) d'incision de la gaine (49) du câble (48), et un organe (7) de serrage du câble vers le couteau, monté mobile sur le corps en regard du couteau et sollicité vers ce dernier par un ressort de rapprochement (8), **caractérisé en ce que** le couteau (3) fait saillie dans un berceau fixe (41) en V solidaire du corps (2) et opposé à l'organe de serrage (7) et est sollicité élastiquement vers cet organe par un second ressort (6) dont la raideur est inférieure à celle du ressort de rapprochement (8).

2. Outil de dénudage suivant la revendication 1, **caractérisé en ce que** le couteau (3) est monté dans un porte-couteau (4) chargé par ledit second ressort (6) vers un épaulement d'appui (20) prévu sur le corps (2).

3. Outil de dénudage suivant la revendication 2, **caractérisé en ce que** le couteau (3) est monté librement rotatif dans le porte-couteau (4).

4. Outil de dénudage suivant la revendication 2 ou 3, **caractérisé en ce que** le couteau est monté dans le porte-couteau (4) avec une liberté limitée de débattement longitudinal.

5. Outil de dénudage suivant l'une quelconque des revendications 2 à 4, **caractérisé en ce que** le porte-couteau (4) présente une face d'extrémité plane (34) adaptée pour buter sur le câble (48) à dénuder.

6. Outil de dénudage suivant l'une quelconque des revendications 1 à 5, **caractérisé en ce que** l'organe de serrage et le berceau (7, 41) sont équipés chacun de moyens de réduction de frottement (40), notamment de rouleaux (40) dont les axes sont perpendiculaires au passage du câble.

7. Outil de dénudage suivant l'une quelconque des revendications 1 à 6, **caractérisé en ce que** l'organe de serrage (7) est un V inversé.

8. Outil de dénudage suivant l'une quelconque des revendications 1 à 7, **caractérisé en ce qu'**il comprend un organe (9) de verrouillage temporaire de l'organe de serrage en position d'attente à l'encontre du ressort de rapprochement (8).
